# EUROPÄISCHE PATENTANMELDUNG

(11) **EP 2 554 862 A1**
(43) Veröffentlichungstag der Anmeldung: **06.02.2013**
(21) Anmeldenummer: 12178844.2
(22) Anmeldetag: 01.08.2012
(51) Int. Cl.: F16C 33/46

(54) **Verriegelung zwischen den beiden Enden eines geschlitzten Wälzlagerkäfigs**

(30) Priorität: 01.08.2011 DE 102011080168
(71) Anmelder: Aktiebolaget SKF, 41 550 Göteborg (SE)
(72) Erfinder: Beck, Burkard, 97294 Unterpleichfeld (DE); Buchheim, Burkhard, 97422 Schweinfurt (DE); Steblau, Dieter, 97074 Würzburg (DE)
(74) Vertreter: Schonecke, Mitja

(57) **Zusammenfassung**

Die Erfindung betrifft einen gestuft geschlitzten Lagerkäfig (10) mit zwei in einer Umfangsrichtung verlaufenden und axial beabstandeten Seitenringen (11), wobei der Lagerkäfig (10) in Umfangsrichtung an wenigstens einer Trennstelle zwischen einem ersten und einem zweiten Lagerkäfigabschnitt (13a; 13b) geschlitzt ausgebildet ist, wobei an gegenüberliegenden Begrenzungsflächen der Trennstelle ein Paar aus einem ersten Vorsprung (15) und einer dazu korrespondierenden ersten Ausnehmung (16) vorgesehen ist, welches ausgebildet ist, um die Lagerkäfigabschnitte (13a; 13b) in einer ersten Richtung zu fixieren, und wobei an gegenüberliegenden Begrenzungsflächen des ersten Vorsprungs (15) und der dazu korrespondierenden ersten Ausnehmung (16) wenigstens ein Paar aus einem zweiten Vorsprung (17) und einer dazu korrespondierenden zweiten Ausnehmung (18) eingeformt ist, welches ausgebildet ist, um die Lagerkäfigabschnitte (13a; 13b) zueinander in wenigstens zwei zusätzlichen Richtungen zu fixieren.

## Beschreibung

Die vorliegende Erfindung betrifft einen geschlitzten Lagerkäfig, insbesondere für Wälzlager, und ein Verfahren zur Herstellung eines solchen Lagerkäfigs.

Lagerkäfige für Wälzlager bestehen im Allgemeinen aus zwei in einem axialen Abstand angeordneten Seitenringen und mehreren, diese Seitenringe verbindenden und in einer Umfangsrichtung des Lagerkäfigs hintereinander angeordneten Stegen, welche paarweise Taschen zur Aufnahme von Wälzkörpern bilden. Ein Lagerkäfig hält die Wälzkörper mittels der dafür vorgesehenen Taschen auf Abstand zueinander und verhindert eine unmittelbare Berührung benachbarter Wälzkörper, wodurch Reibung und damit Wärmeentwicklung im Lager typischerweise verringert werden kann. Er sorgt außerdem für eine gleichmäßige Verteilung der Wälzkörper über einen gesamten Umfang des Käfigs bzw. Wälzlagers und ermöglicht so eine gleichmäßige Lastverteilung sowie einen ruhigen und gleichmäßigen Lauf.

Wälzlagerkäfige werden im Betrieb durch Reibungs-, Zerr- und Trägheitskräfte mechanisch stark beansprucht. Dazu können unter Umständen auch chemische Einwirkungen durch bestimmte Zusätze und Substanzen kommen. Formgebung und Werkstoffwahl sind deshalb für eine Funktionstüchtigkeit des Käfigs ebenso wie für eine Betriebszuverlässigkeit des Lagers, insgesamt von entscheidender Bedeutung. Typischerweise umfassen Wälzlagerkäfige gepresste Käfige und Massivkäfige. Gepresste Käfige für Wälzlager werden meist aus Stahlblech, in einigen Fällen auch aus Messingblech gefertigt. Massivkäfige für Wälzlager können beispielsweise aus Messing, Stahl, Aluminium, Polymeren oder Phenolharz hergestellt sein.

Kunststoffmassivkäfige, die oftmals mittels Spritzgussverfahren gefertigt werden, zeichnen sich durch eine günstige Kombination von Festigkeit und Elastizität aus. Gute Gleiteigenschaften von Kunststoff auf geschmierten Stahlflächen und eine geringe Rauheit der Käfigoberflächen an Berührungsstellen mit Wälzkörpern haben eine niedrige Käfigreibung, eine entsprechend geringe Wärmeentwicklung im Lager und einen kaum messbaren Verschleiß zur Folge. Wegen der geringen Werkstoffdichte bleiben auch Kräfte aus der Massenträgheit des Käfigs klein. Dank sehr guter Notlaufeigenschaften von Kunststoffkäfigen bleibt ein Lager selbst bei völligem Versagen der Schmierung noch für einige Zeit funktionsfähig, ohne dass es zum Blockieren des Lagers oder zu weiteren Folgeschäden kommt.

Bei Kunststoffen für herkömmlich gespritzte Wälzlagerkäfige kann es sich beispielsweise um Polyamid 66, Polyamid 46, Polyetheretherketon (PEEK), Phenolharz oder auch einen anderen Polymerwerkstoff handeln.

Aus dem Stand der Technik sind auch Wälzlagerkäfige bekannt, welche an einer Trennstelle bzw. -fuge in Umfangsrichtung einen durchgehenden Schlitz aufweisen. Die die Trennstelle begrenzenden Käfig- bzw. Seitenringenden werden dabei durch Stege (Umfangsstege) gebildet, welche zueinander korrespondierende Vorsprünge und Ausnehmungen aufweisen, um die Käfigenden beispielsweise mittels einer Schnappverbindung miteinander zu fixieren bzw. zu koppeln. Derartige geschlitzte Wälzkörperkäfige, bei denen ein an den Käfigenden angebrachtes so genanntes Schloss die Käfigenden festlegt bzw. fixiert, können vielseitig eingesetzt werden, wie z.B. bei der Lagerung von Ausgleichswellen oder zur Lagerung von Zahnrädern auf Wellen in schaltgetriebenen Kraftfahrzeugen.

Bei bekannten geschlitzten Wälzlagerkäfigen sind die Vorsprünge und Ausnehmungen an den Käfigenden zumeist so gestaltet, dass die Käfigenden in wenigstens einer Richtung aus der Menge axialer, radialer und tangentialer Richtungen nicht verliersicher gehalten werden. Selbst wenn dies der Fall ist, weisen bekannte Verbindungs- bzw. Festlegungskonzepte für Käfigenden Nachteile hinsichtlich ihrer Belastbarkeit und/oder Festigkeit in wenigstens einer der vorgenannten Richtungen auf.

Es ist daher eine Aufgabe der vorliegenden Erfindung, den Stand der Technik hinsichtlich geschlitzter Lagerkäfige weiterzubilden, und ein verbessertes Konzept für einen geschlitzten Lagerkäfig sowie für dessen Herstellung bereitzustellen.

Es ist eine Erkenntnis der vorliegenden Erfindung, eine Festlegung (Fixierung) in wenigstens eine Richtung (z. B. axial und/oder radial) von zwei durch eine Trennstelle getrennten Enden eines ersten und eines zweiten Lagerkäfigabschnitts vermittels eines in Lagerkäfigabschnittenden eingeformten Paars aus einem ersten Vorsprung und einer ersten Ausnehmung zu erhalten. Dabei stammt die wenigstens eine Richtung aus einer Menge aus einer axialen, einer radialen und einer tangentialen Richtung. Der erste (männliche) Vorsprung und die erste dazu korrespondierende (weibliche) Ausnehmung sind an bzw. in die Begrenzungsflächen der Trennstelle des ersten und des zweiten Lagerkäfigabschnitts an- bzw. eingeformt. Sie sind ausgebildet, um bei einem Ineinanderschieben des ersten Vorsprungs und der dazu korrespondierenden ersten Ausnehmung eine formschlüssige Verbindung des ersten und des zweiten Lagerkäfigabschnitts in der wenigstens einen Richtung zu gewährleisten. Für eine zusätzliche Fixierung der beiden Lagerkäfigabschnitte an der Trennstelle in zwei weiteren, zu der wenigstens einen Richtung jeweils senkrechten Richtungen aus der Menge, ist an gegenüberliegenden Begrenzungsflächen des ersten Vorsprungs und der dazu korrespondierenden ersten Ausnehmung ferner wenigstens ein Paar aus einem zweiten Vorsprung und einer dazu korrespondierenden zweiten Ausnehmung vorgesehen, welches ausgebildet ist, um die beiden Lagerkäfigabschnitte zusätzlich in den beiden weiteren Richtungen zu fixieren.

Dazu sehen Ausführungsbeispiele der vorliegenden Erfindung einen Lagerkäfig für ein Wälzlager mit zwei in einer Umfangsrichtung verlaufenden und axial beabstandeten Seitenringen vor, wobei der Lagerkäfig in Umfangsrichtung an wenigstens oder genau einer Trennstelle zwischen einem ersten und einem zweiten Lagerkäfigabschnitt geschlitzt ausgebildet ist. Gemäß einigen Ausführungsbeispielen ist also ein Lagerkäfig vorgesehen, der an genau einer Trennstelle bzw. -fuge in Umfangsrichtung des Lagerkäfigs einen durchgehenden Schlitz aufweist. An gegenüberliegenden Begrenzungsflächen der Trennstelle ist ein Paar aus einem ersten Vorsprung und einer dazu korrespondierenden ersten Ausnehmung eingeformt, welches ausgebildet ist, um die Lagerkäfigabschnitte in einer ersten Richtung (aus der Menge aus axialer, radialer und tangentialer Richtung) zu fixieren. An gegenüberliegenden Begrenzungsflächen des ersten Vorsprungs und der dazu korrespondierenden ersten Ausnehmung ist ferner wenigstens ein Paar aus einem zweiten Vorsprung und einer dazu korrespondierenden zweiten Ausnehmung eingeformt, welches ausgebildet ist, um die Lagerkäfigabschnitte zueinander in wenigstens zwei zusätzlichen (von der wenigstens einen Richtung verschiedenen) Richtungen zu fixieren.

Die drei Richtungen sind dabei zueinander senkrecht, wie z. B. eine radiale, eine tangentiale und eine axiale Richtung (entlang einer Rotationsachse des Lagerkäfigs).

Gemäß einem Ausführungsbeispiel sind der an der Trennstelle eingeformte erste Vorsprung und die dazu korrespondierende erste Ausnehmung in Umfangs- bzw. Tangentialrichtung an gegenüberliegenden Begrenzungsflächen der Trennstelle an- bzw. eingeformt, so dass sich der erste Vorsprung und die dazu korrespondierende erste Ausnehmung in Umfangsrichtung gesehen ineinanderschieben lassen. D.h., der erste Vorsprung und die dazu korrespondierende erste Ausnehmung erstrecken sich jeweils in entgegengesetzte Umfangs- bzw. Tangentialrichtungen. Dadurch erhält man, je nach Ausführungsform, durch das Paar von erstem Vorsprung und erster Ausnehmung wenigstens eine axiale, wenigstens eine radiale oder eine kombinierte axiale/radiale Fixierung der beiden Lagerkäfigabschnitte.

Das wenigstens eine Paar einander zugeordneter zweiter Vorsprünge und dazu korrespondierender zweiter Ausnehmungen ist gemäß Ausführungsbeispielen an in axialer und/oder radialer Richtung gegenüberliegenden Begrenzungsflächen des ersten Vorsprungs und der dazu korrespondierenden ersten Ausnehmung ein- oder angeformt. Das bedeutet, dass ein zweiter (männlicher) Vorsprung beispielsweise an einer axialen Begrenzungsfläche des ersten Vorsprungs angeformt sein kann, wohingegen eine zu dem ersten Vorsprung korrespondierende zweite Ausnehmung in eine axial gegenüberliegende Begrenzungsfläche der ersten Ausnehmung eingeformt ist. Genauso gut könnte es sich natürlich umgekehrt verhalten. Im Folgenden soll unter axialer Begrenzungsfläche eine Begrenzungsfläche mit einer Flächennormalen in axialer Richtung zu verstehen sein. Entsprechendes gilt natürlich auch für die jeweils anderen Richtungen. D.h., ein zweiter Vorsprung und eine dazu korrespondierende zweite Ausnehmung erstrecken sich jeweils in entgegengesetzte Richtungen senkrecht zur Umfangs- bzw. Tangentialrichtung.

Mit geschlitzten Lagerkäfigen gemäß Ausführungsbeispielen der vorliegenden Erfindung können stabilere und/oder belastbare Verbindungen der beiden Lagerkäfigabschnitte erreicht werden als mit herkömmlichen geschlitzten Lagerkäfigen. Durch die bei Ausführungsbeispielen geschickt gewählte Anordnung bzw. Formgebung des Paars aus erstem Vorsprung und erster Ausnehmung sowie der darauf abgestimmten und dazu senkrechten Anordnung des wenigstens einen Paars aus zweitem Vorsprung und zweiter Ausnehmung wird eine formschlüssige Verbindung der Lagerkäfigabschnitte in radialer, tangentialer und axialer Richtung erreicht, welche gleichzeitig in sämtlichen dieser drei Richtungen belastbar ist. Selbst bei aus Kunststoff gebildeten Lagerkäfigen kommt es mittels Ausführungsbeispielen der vorliegenden Erfindung weniger schnell zu einem Ausbrechen von Vorsprüngen und/oder Ausnehmungen als dies bei herkömmlichen geschlitzten Lagerkäfiganordnungen der Fall ist.

Vorzugsweise weist ein zweiter Vorsprung des ersten Lagerkäfigabschnitts gegenüber einer zweiten Ausnehmung des zweiten Lagerkäfigabschnitts ein gewisses Übermaß auf, so dass beim Eindringen des zweiten Vorsprungs in die dazu korrespondierende zweite Ausnehmung eine Schnappverbindung der beiden Lagerkäfigabschnitte gebildet werden kann, um die Lagerkäfigabschnitte an der Trennstelle, zusätzlich zu der Fixierung in der ersten Richtung durch das Paar aus erstem Vorsprung und erster Ausnehmung, in wenigstens zwei weiteren Richtungen zu fixieren. In anderen Worten ausgedrückt bedeutet dies, dass durch das Paar aus dem ersten Vorsprung und der dazu korrespondierenden ersten Ausnehmung eine Fixierung der Lagerkäfigabschnitte in axialer und/oder radialer Richtung bewirkt werden kann. Bei einer beispielhaften axialen Fixierung der beiden Lagerkäfigabschnitte zueinander, können an axialen Grenzflächen des ersten Vorsprungs und der ersten Ausnehmung jeweils zweite Vorsprünge und Ausnehmungen ein- bzw. angeformt sein, um die Lagerkäfigabschnitte an der Trennstelle zusätzlich sowohl in radialer als auch in tangentialer Richtung zueinander zu fixieren. Andere Konstellationen sind aber ebenfalls denkbar.

Gemäß manchen Ausführungsbeispielen weist der an der Trennstelle an- bzw. eingeformte erste Vorsprung einen im Wesentlichen rechteckigen Querschnitt senkrecht zur Rotationsachse des Lagerkäfigs auf. Entsprechend weist dann die zu dem ersten Vorsprung korrespondierende erste Ausnehmung ebenfalls einen dem im wesentlichen rechteckigen Querschnitt angepassten (inversen) Hohlraum mit rechteckigem Querschnitt senkrecht zur Rotationsachse des Lagerkäfigs auf. Auch in einer Ebene parallel zur Rotationsachse können sowohl erster Vorsprung als auch erste Ausnehmung zueinander korrespondierende rechteckige Querschnitte aufweisen. Insgesamt bedeutet dies, dass der an der Trennstelle eines Lagerkäfigabschnitts angeformte erste Vorsprung im Wesentlichen ein quaderförmiger Vorsprung sein kann. Entsprechend kann die an der gegenüberliegenden Begrenzungsfläche der Trennstelle eingeformte erste Ausnehmung eine dazu angepasste quaderförmige Ausnehmung sein.

Soll durch den ersten Vorsprung und die erste Ausnehmung hauptsächlich eine axiale Fixierung der Lagerkäfigabschnitte erreicht werden, so können sich sowohl der erste Vorsprung als auch die erste Ausnehmung in radialer Richtung entsprechend einer gesamten radialen Höhe (bzw. Erstreckung) der Lagerkäfigabschnitte erstrecken. Eine axiale Erstreckung des ersten Vorsprungs und der ersten Ausnehmung ist dabei geringer als eine gesamte axiale Breite der Lagerkäfigabschnitte. Soll zusätzlich mit dem ersten Vorsprung und der dazu korrespondierenden ersten Ausnehmung auch eine radiale Fixierung erreicht werden, so ist eine geringere radiale Erstreckung des ersten Vorsprungs und der ersten Ausnehmung zu wählen. Bei einer beabsichtigten rein radialen Fixierung der beiden Lagerkäfigabschnitte durch das Paar aus erstem Vorsprung und erster Ausnehmung kann eine radiale Erstreckung der ersten Ausnehmung und des ersten Vorsprungs kleiner als die radiale Erstreckung (Höhe) der Lagerringabschnitte gewählt werden, wobei eine axiale Erstreckung von erstem Vorsprung und dazu korrespondierende erste Ausnehmung einer gesamten axialen Erstreckung (Breite) der Lagerkäfigabschnitte entspricht.

Gemäß manchen Ausführungsbeispielen können die an den Begrenzungsflächen des ersten Vorsprungs sowie der ersten Ausnehmung platzierten zweiten Vorsprünge einen im Wesentlichen halbkreisförmigen Querschnitt parallel zur Rotationsachse des Lagerkäfigs aufweisen. Dementsprechend können die zu dem wenigstens einen zweiten Vorsprung korrespondierenden zweiten Ausnehmung in einen dem im Wesentlichen halbkreisförmigen Querschnitt angepassten sphärischen Querschnitt parallel zur Rotationsachse des Lagerkäfigs aufweisen. Das bedeutet, dass die an den ersten Vorsprung oder in die erste Ausnehmung angeformtem zweiten Vorsprünge eine im Wesentlichen halbkugelige bis kugelige Form haben können. Die dazu korrespondierenden zweiten Ausnehmungen können dann entsprechende halbkugelige bis kugelige Ausnehmungen aufweisen.

Um eine besonders starke und strapazierfähige axiale Fixierung zwischen den beiden Lagerkäfigabschnitten zu erhalten, kann der erste Vorsprung in axialer Richtung gegenüber der dazu korrespondierenden ersten Ausnehmung ein (leichtes) axiales Übermaß aufweisen, so dass beim Einschieben des ersten Vorsprungs in die erste Ausnehmung eine Presspassung der Lagerkäfigabschnitte gebildet werden kann, um die Lagerkäfigabschnitte an der Trennstelle in axialer Richtung besonders stark zueinander zu fixieren. Gleiches ist bei anderen Ausführungsbeispielen selbstverständlich auch in anderen Richtungen, wie zum Beispiel einer radialen Richtung, möglich.

Für ebenfalls eine gute axiale Stabilisierung kann sich das Paar aus dem ersten Vorsprung und der dazu korrespondierenden ersten Ausnehmung in axialer Richtung im Wesentlichen entsprechend einer axialen Erstreckung eines die Umfangsstege verbindenden Verbindungsstegs erstrecken. Dadurch kann insbesondere ein Ausbrechen des ersten Vorsprungs bei axialer Beanspruchung vermieden werden.

Obwohl Lagerkäfige, wie es eingangs bereits beschrieben wurde, prinzipiell aus verschiedenen Materialien hergestellt sein können, umfassen Ausführungsbeispiele insbesondere aus Kunststoff geformte und geschlitzt ausgebildete Wälzlagerkäfige. Ausführungsbeispiele der vorliegenden Erfindung umfassen somit auch Wälzlager mit geschlitzten Wälzlagerkäfigen gemäß Ausführungsbeispielen. Die Kunststoffkäfige können beispielsweise mittels eines Kunststoff-Spritzgussverfahrens hergestellt werden.

Weitere Ausführungsbeispiele der vorliegenden Erfindung sehen auch ein Verfahren zum Herstellen eines erfindungsgemäßen Lagerkäfigs vor. Ein derartiges Verfahren umfasst dazu einen Schritt des Ausbildens einer Trennstelle zwischen einem ersten und einem zweiten Lagerkäfigabschnitt. In einem weiteren Schritt wird an gegenüberliegenden Begrenzungsflächen der Trennstelle ein Paar aus einem ersten Vorsprung und einer dazu korrespondierenden ersten Ausnehmung eingeformt, um die Lagerkäfigabschnitte in wenigstens einer ersten Richtung zu fixieren. Weiterhin wird an gegenüberliegenden Begrenzungsflächen des ersten Vorsprungs und der dazu korrespondierenden ersten Ausnehmung wenigstens ein Paar aus einem zweiten Vorsprung und einer dazu korrespondierenden zweiten Ausnehmung eingeformt, um die Lagerkäfigabschnitte zueinander in wenigstens zwei weiteren Richtungen zu fixieren.

Weitere Ausführungsformen und vorteilhafte Weiterbildungen sind Gegenstand der abhängigen Ansprüche sowie der nachfolgenden detaillierten Beschreibung.

Ausführungsbeispiele werden nachfolgend bezugnehmend auf die beiliegenden Figuren näher erläutert. Es zeigen:
- Fig. 1: eine dreidimensionale Darstellung eines geschlitzten Lagerkäfigs mit Schloss in geöffnetem Zustand, gemäß einem Ausführungsbeispiel; und
- Fig. 2: eine vergrößerte zweidimensionale Darstellung des Schlosses in offenem Zustand an einem Seitenring des geschlitzten Lagerkäfigs gemäß Fig. 1.

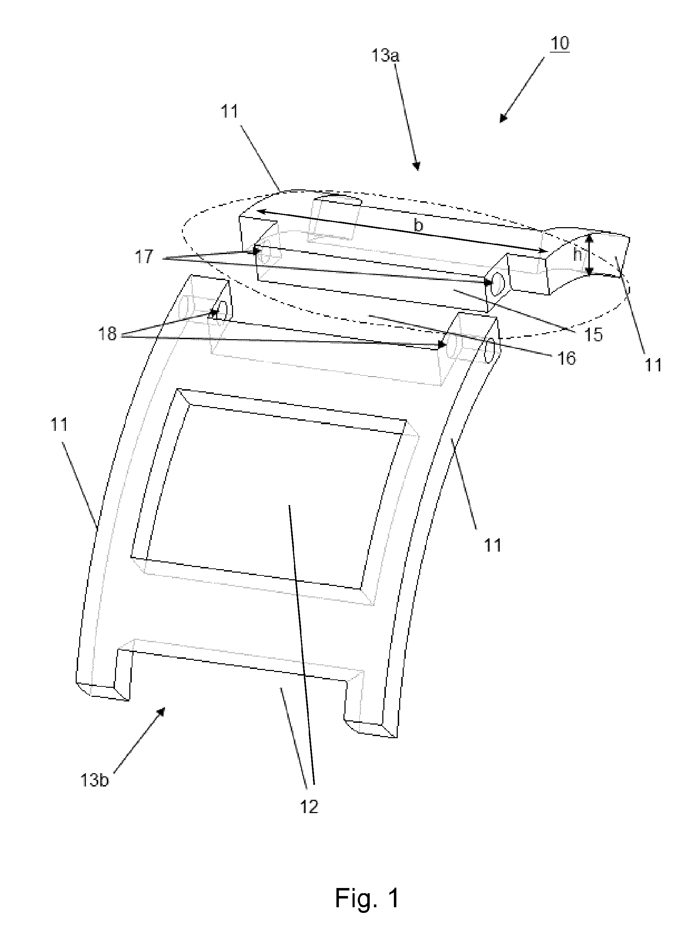

Die Fig. 1 zeigt einen Ausschnitt einer dreidimensionalen Darstellung eines gestuft geschlitzten Lagerkäfigs 10 gemäß einem Ausführungsbeispiel.

Der Lagerkäfig 10 weist zwei in Umfangsrichtung verlaufende und in axialer Richtung beabstandete Seitenringe 11 auf, zwischen denen Taschen 12 zur Aufnahme von (nicht gezeigten) Wälzkörpern angeordnet sein können bzw. angeordnet sind. Der geschlitzte Lagerkäfig 10 ist in Umfangsrichtung, die im Nachfolgenden auch als Tangentialrichtung bezeichnet wird, an wenigstens einer Trennstelle bzw. einem Schlitz zwischen einem ersten und einem zweiten Lagerkäfigabschnitt 13a und 13b geschlitzt ausgebildet.

An den jeweiligen Lagerkäfigabschnitten 13a und 13b zugeordneten Begrenzungsflächen 14 der Trennstelle ist ein Paar aus einem ersten Vorsprung 15 und einer dazu korrespondierenden ersten Ausnehmung 16 vorgesehen, welches ausgebildet ist, um die Lagerkäfigabschnitte 13a, 13b vorrangig in einer ersten (hier: axialen) Richtung zu fixieren. An gegenüberliegenden Begrenzungsflächen des ersten Vorsprungs 15 und der dazu korrespondierenden ersten Ausnehmung 16 ist wenigstens ein Paar aus einem zweiten Vorsprung 17 und einer dazu korrespondierenden zweiten Ausnehmung 18 an- bzw. eingeformt, welches ausgebildet ist, um die Lagerkäfigabschnitte 13a, 13b zueinander in wenigstens zwei zusätzlichen Richtungen (hier: radial und tangential) zu fixieren.

Wie es aus der Fig. 1 zu erkennen ist, können der an der Trennstelle angeformte erste Vorsprung 15 und die dazu korrespondierende, gegenüberliegende ersten Ausnehmung 16 in Umfangsrichtung (Tangentialrichtung) an gegenüberliegenden Begrenzungsflächen der Trennstelle an- bzw. eingeformt sein, so dass sich der erste Vorsprung 15 und die dazu korrespondierende erste Ausnehmung 16 in Umfangsrichtung ineinanderschieben lassen. Der erste Vorsprung 15 sowie die erste dazu korrespondierende Ausnehmung 16 bilden quasi eine Stufe der Trennstelle der beiden Lagerkäfigabschnitte 13a, 13b, so dass es sich um einen gestuft geschlitzten Lagerkäfigs 10 handelt.

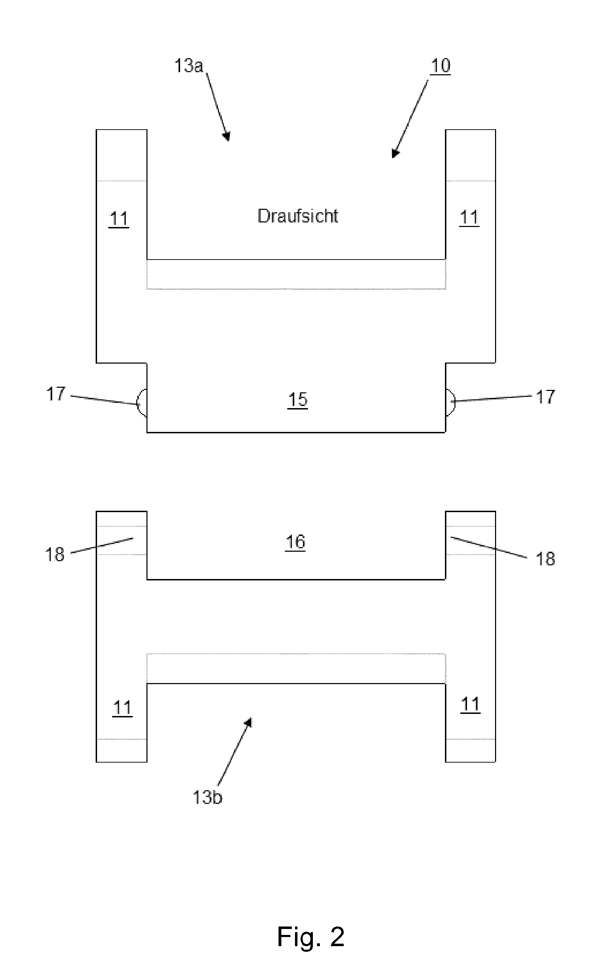

Wie es aus der Fig. 1 und insbesondere aus der vergrößernden Draufsicht der Fig. 2 zu erkennen ist, kann der an der Trennstelle angeformte und in Umfangsrichtung weisende erste Vorsprung 15 einen im Wesentlichen rechteckigen Querschnitt senkrecht und parallel zur Rotationsachse des Lagerkäfigs 10 aufweisen. Entsprechend verhält es sich mit der Formgebung der dazu korrespondierenden inversen ersten Ausnehmung 16, welche einen dem im wesentlichen rechteckigen Querschnitt des Vorsprungs 15 angepassten rechteckigen Querschnitt senkrecht und parallel zur Rotationsachse des Lagerkäfigs 10 aufweisen kann. Wie es in der Fig. 1 schematisch dargestellt ist, kann es sich bei dem ersten Vorsprung also um einen im Wesentlichen quaderförmigen Vorsprung bzw. um eine quaderförmige Lippe handeln, die sich in Umfangsrichtung erstreckt. Darauf angepasst kann sich bei der ersten Ausnehmung 16 um eine dazu korrespondierende und gegenüberliegende quaderförmig Ausnehmung bzw. einen quaderförmig Hohlraum in dem zweiten Lagerkäfigabschnitt 13b handeln.

Obwohl bei dem hier lediglich exemplarisch beschriebenen Ausführungsbeispiel eine radiale Erstreckung des ersten Vorsprungs 15 sowie der ersten Ausnehmung 16 einer kompletten Höhe h der Lagerkäfigabschnitte 13a und 13b in radialer Richtung entspricht, so dass durch das Paar aus erstem Vorsprung 15 und erster Ausnehmung 16 im Wesentlichen eine rein axiale Fixierung erzielt wird, können andere Ausführungsbeispiele auch geringere radiale Erstreckungen des ersten Vorsprungs 15 sowie der dazu korrespondierenden ersten Ausnehmung 16 vorsehen. In derartigen Fällen kann zusätzlich oder alternativ eine radiale Fixierung der beiden Lagerkäfigabschnitte 13a und 13b erreicht werden. Für eine vornehmlich radiale Fixierung könnte das Paar aus erstem Vorsprung 15 und erster Ausnehmung 16 auch eine axiale Erstreckung aufweisen, welche der kompletten Breite b des Lagerkäfigs 10 entspricht.

Gemäß Ausführungsbeispielen ist das wenigstens eine Paar einander zugeordneter zweiter Vorsprünge 17 und dazu korrespondierender zweiter Ausnehmungen 18 an in axialer oder radialer Richtung gegenüberliegenden Begrenzungsflächen des ersten Vorsprungs 15 und der dazu korrespondierenden ersten Ausnehmung 16 an- bzw. eingeformt. Im Allgemeinen weist ein zweiter Vorsprung 17 in eine Richtung senkrecht zur Vorsprungsrichtung des ersten Vorsprungs 15. Entsprechend verhält es sich mit der ersten Ausnehmung 16 und einer zweiten Ausnehmung 18. Gemäß dem in der Fig. 1 exemplarisch gezeigten Ausführungsbeispiel sind an den beiden in axiale Richtung weisenden Begrenzungsflächen des in Tangentialrichtung weisenden ersten Vorsprungs 15 jeweils zweite Vorsprünge 17 angeformt. Demgemäß sind in die beiden in axiale Richtung weisenden Begrenzungsflächen der ersten Ausnehmung 16 zu den zweiten Vorsprüngen 17 korrespondierende zweite Ausnehmungen 18 eingeformt. Bei anderen Ausführungsformen könnten zusätzlich oder alternativ auch an radialen Begrenzungsflächen des ersten Vorsprungs 15 und der ersten Ausnehmung 16 weitere Paare von zweiten Vorsprüngen 17 und Ausnehmungen 18 an- bzw. eingeformt sein.

Während das Paar aus erstem Vorsprung 15 und der dazu korrespondierenden ersten Ausnehmung 16 ausgebildet ist, um die Lagerkäfigabschnitte 13a, 13b in axialer und/oder radialer Richtung zueinander zu fixieren, kann gemäß Ausführungsbeispielen wenigstens ein zweiter Vorsprung 17 des ersten Lagerkäfigabschnitts 13a gegenüber einer zweiten Ausnehmung 18 des zweiten Lagerkäfigabschnitts 13b ein (leichtes) Übermaß aufweisen, so dass beim Eindringen eines zweiten Vorsprungs 17 in eine zweite Ausnehmung 18 eine Schnapp- oder Klemmverbindung der Lagerkäfigabschnitte 13a und 13b gebildet werden kann, um die Lagerkäfigabschnitte an ihrer Trennstelle zusätzlich sowohl in radialer (oder axialer) als auch in tangentialer Richtung zueinander zu fixieren.

Der wenigstens eine zweite Vorsprung 17 kann gemäß manchen Ausführungsbeispielen einen im wesentlichen halbkreis- bis kreisförmigen Querschnitt parallel zur Rotationsachse des Lagerkäfigs 10 aufweisen, wobei eine zu dem wenigstens einen zweiten Vorsprung 17 korrespondierende zweite Ausnehmung 18 einen dem im wesentlichen halbkreis- bis kreisförmigen Querschnitt angepassten sphärischen Querschnitt parallel zur Rotationsachse des Lagerkäfigs 10 aufweisen kann. In anderen Worten ausgedrückt bedeutet dies, dass ein zweiter Vorsprung 17 eine im Wesentlichen halbkugel- bis kugelförmige Geometrie aufweisen kann. Dazu korrespondierend würde dann eine zweite Ausnehmung 18 eine im Wesentlichen halbkugel- bis kugelförmige Sphäre aufweisen. Insbesondere eher kugelförmige Geometrien können im Hinblick auf eine Ausführungsform mit Übermaß der zweiten Vorsprünge 17 gegenüber den zweiten Ausnehmungen 18 vorteilhaft sein.

Durch die Kombination der Paare aus erstem Vorsprung 15 und zweitem Vorsprung 16, sowie der daran befindlichen zweiten Paare aus zweiten Vorsprüngen 17 und zweiten Ausnehmungen 18 können die beiden Lagerkäfigabschnitte 13a und 13b des gestuft geschlitzten Lagerkäfigs 10 vorteilhaft in allen drei Richtungen, d.h. axial, tangential und radial, zueinander fixiert werden. Die Stärke der jeweiligen Fixierung kann durch die jeweiligen Geometrien der Vorsprünge 15, 17 und Ausnehmungen 16, 18 eingestellt werden.

Soll beispielsweise eine besonders ausgeprägte axiale Fixierung erreicht werden, so kann der erste Vorsprung 15 in axialer Richtung gegenüber der dazu korrespondierenden ersten Ausnehmung 16 ein (leichtes) Übermaß aufweisen, so dass beim Einschieben des ersten Vorsprungs 15 in die erste Ausnehmung 16 eine Art Presspassung der Lagerkäfigabschnitte 13a und 13b gebildet werden kann, um die Lagerkäfigabschnitte 13a, 13b an der Trennstelle in axialer Richtung zueinander zu fixieren. Dies setzt natürlich eine gewisse Elastizität voraus, die aber bei Kunststofflagerkäfigen im Allgemeinen gegeben ist. Bei einer derartigen Ausführungsform können die zweiten Vorsprünge 17 und die dazu korrespondierenden zweiten Ausnehmungen 18 durchaus geringere Abmessungen einnehmen als bei Ausführungsbeispielen ohne die beschriebene axiale Presspassung. Entsprechend können auch die Abmessungen der zweiten Vorsprünge 17 und Ausnehmungen 18 eingestellt werden, um eine starke oder eher schwächere radiale/tangentiale Fixierung der beiden Lagerkäfigabschnitte 13a, 13b zu erhalten.

Gemäß manchen Ausführungsbeispielen kann sich das Paar aus dem ersten Vorsprung 15 und der dazu korrespondierenden ersten Ausnehmung 16 in axialer Richtung im Wesentlichen entsprechend einer axialen Erstreckung eines die Umfangsstege 11 verbindenden Verbindungsstegs erstrecken. D.h., die axiale Erstreckung des ersten Vorsprungs 15 und/oder der dazu korrespondierenden ersten Ausnehmung 16 kann im Wesentlichen einer axialen Erstreckung von durch die Verbindungsstege begrenzten Taschen 12 zur auf Aufnahme von Wälzkörpern entsprechen. Dies kann bei manchen Ausführungsbeispielen eine, gemessen an der gesamten axialen Erstreckung b des Lagerkäfigs 10, recht signifikante Erstreckung sein, wodurch eine sehr stabile Kopplung der beiden Lagerkäfigabschnitte 13a, 13b erreicht werden kann, insbesondere in axialer Richtung. Beispielsweise könnte die axiale Erstreckung des ersten Vorsprungs 15 (und damit auch eine axiale Erstreckung der dazu korrespondierenden ersten Ausnehmung 16, in einem Bereich von 40 % bis 98 % der gesamten axialen Erstreckung b des Lagerkäfigs 10 und insbesondere in einem Bereich von 70 % bis 90 % dieser Erstreckung liegen. Der erste Vorsprung 15 kann somit in verschnapptem Zustand der zweiten Vorsprünge 17 und Ausnehmungen 18 bzw. der Lagerkäfigabschnitte 13a, 13b quasi ebenfalls als Verbindungssteg zwischen den Seitenringen 11 wirken.

Es versteht sich von selbst, dass die in der vorliegenden Spezifikation beschriebenen Abmessungen der Vorsprünge 15, 17 sowie der Ausnehmungen 16, 18 auch durchaus anders gewählt werden können, um ein gestuft geschlitztes Lagerkäfigdesign an seine radialen, tangentialen und/oder axialen Belastungen anzupassen. So könnte beispielsweise anstatt des ersten Vorsprungs 15 auch beispielsweise eine Mehrzahl nebeneinander angeordneter erster Vorsprünge 15 zwischen den axial außen liegenden ersten Seitenringen 11 angeordnet sein. Entsprechendes gilt selbstverständlich auch für die korrespondierende erste Ausnehmung 16.

Ausführungsbeispiele des hierin beschriebenen geschlitzten Lagerkäfigs 10 können beispielsweise aus Kunststoff gefertigt sein. Dabei kann der gestuft geschlitzte Lagerkäfig 10 insbesondere mittels eines Kunststoff-Spritzgussverfahrens hergestellt werden. Bei lediglich einer Trennstelle in einem ringförmigen Lagerkäfig, kann es sich bei dem Lagerkäfig 10 auch um ein einstückig geformtes Spritzgussteil handeln.

Es versteht sich von selbst, dass erfindungsgemäß gestuft geschlitzte Lagerkäfige in Wälzlagern zum Einsatz kommen können, so dass Ausführungsbeispiele der vorliegenden Erfindung auch Wälzlager mit erfindungsgemäßen Lagerkäfigen umfassen.

Zusammenfassend betreffen Ausführungsbeispiele der vorliegenden Erfindung einen gestuft geschlitzten Kunststoffkäfig mit Schloss. Die gestufte Schlitzform kann eine Fixierung der offenen Seiten bzw. Abschnitte in axialer Richtung sicherstellen und eine gegenseitige Versetzung verhindern. Das Schloss, umfassend Ausnehmungen 16, 18 z.B. auf einer Schlitzseite und die Vorsprünge 15, 17 z.B. auf der anderen Schlitzseite, kann nach einem Montageprozess "radiales/axiales Aufschnappen eines Rollenkranzes auf eine Welle" einen Spalt verhindern und einen Formschluss zwischen offenen Schlitzseiten sicherstellen. Somit stellt die Kombination "gestufter Schlitz + Schloss" eine Fixierung der Lagerkäfigabschnitte in axialer, radialer und tangentialer Richtung dar.

### Bezugszeichenliste

- 10: geschlitzter Lagerkäfig
- 11: Seitenring, Umfangssteg
- 12: Tasche für Wälzkörper
- 13: Lagerkäfigabschnitt
- 14: Begrenzungsfläche
- 15: erster Vorsprung
- 16: erste Ausnehmung
- 17: zweiter Vorsprung
- 18: zweite Ausnehmung
- 19: Rotationsachse

## Patentansprüche

1. Ein Lagerkäfig (10) für ein Wälzlager mit zwei in einer Umfangsrichtung verlaufenden und axial beabstandeten Seitenringen (11),
wobei der Lagerkäfig (10) in Umfangsrichtung an wenigstens einer Trennstelle zwischen einem ersten und einem zweiten Lagerkäfigabschnitt (13a; 13b) geschlitzt ausgebildet ist,
wobei an gegenüberliegenden Begrenzungsflächen der Trennstelle ein Paar aus einem ersten Vorsprung (15) und einer dazu korrespondierenden ersten Ausnehmung (16) vorgesehen ist, welches ausgebildet ist, um die Lagerkäfigabschnitte (13a; 13b) in einer ersten Richtung zu fixieren, und
wobei an gegenüberliegenden Begrenzungsflächen des ersten Vorsprungs (15) und der dazu korrespondierenden ersten Ausnehmung (16) wenigstens ein Paar aus einem zweiten Vorsprung (17) und einer dazu korrespondierenden zweiten Ausnehmung (18) eingeformt ist, welches ausgebildet ist, um die Lagerkäfigabschnitte (13a; 13b) zueinander in wenigstens zwei zusätzlichen Richtungen zu fixieren,
wobei der an der Trennstelle angeformte erste Vorsprung (15) und die dazu korrespondierende erste Ausnehmung (16) in Umfangsrichtung an gegenüberliegenden Begrenzungsflächen der Trennstelle eingeformt sind, so dass sich der erste Vorsprung (15) und die dazu korrespondierende erste Ausnehmung (16) in Umfangsrichtung ineinander schieben lassen,
wobei das wenigstens eine Paar einander zugeordneter zweiter Vorsprünge (17) und dazu korrespondierender zweiter Ausnehmungen (18) an in radialer Richtung gegenüberliegender Begrenzungsflächen des ersten Vorsprungs (15) und der dazu korrespondierenden ersten Ausnehmung (16) eingeformt ist.

2. Der Lagerkäfig (10) nach Anspruch 1, wobei das Paar aus dem ersten Vorsprung (15) und der dazu korrespondierenden ersten Ausnehmung (16) ausgebildet ist, um die Lagerkäfigabschnitte (13a; 13b) in axialer und/oder radialer Richtung zueinander zu fixieren, und wobei wenigstens ein zweiter Vorsprung (17) des ersten Lagerkäfigabschnitts (13a; 13b) gegenüber einer zweiten Ausnehmung (18) des zweiten Lagerkäfigabschnitts (13b; 13a) ein Übermaß aufweist, so dass beim Eindringen des zweiten Vorsprungs (17) in die zweite Ausnehmung (18) eine Schnappverbindung der Lagerkäfigabschnitte (13a; 13b) gebildet werden kann, um die Lagerkäfigabschnitte (13a; 13b) an der Trennstelle zusätzlich sowohl in radialer oder axialer als auch in tangentialer Richtung zueinander zu fixieren.

3. Der Lagerkäfig (10) nach einem der vorhergehenden Ansprüche, wobei der an der Trennstelle eingeformte erste Vorsprung (15) einen im wesentlichen rechteckigen Querschnitt senkrecht und parallel zur Rotationachse des Lagerkäfigs (10) aufweist, und wobei die zu dem ersten Vorsprung (15) korrespondierende erste Ausnehmung (16) einen dem im wesentlichen rechteckigen Querschnitt angepassten rechteckigen Querschnitt senkrecht und parallel zur Rotationachse des Lagerkäfigs aufweist.

4. Der Lagerkäfig (10) nach einem der vorhergehenden Ansprüche, wobei der wenigstens eine zweite Vorsprung (17) einen im wesentlichen halbkreis- bis kreisförmigen Querschnitt parallel und/oder senkrecht zur Rotationachse des Lagerkäfigs (10) aufweist, und wobei eine zu dem wenigstens einen zweiten Vorsprung (17) korrespondierende zweite Ausnehmung (18) einen dem im wesentlichen halbkreis- bis kreisförmigen Querschnitt angepassten sphärischen Querschnitt parallel zur Rotationachse des Lagerkäfigs (10) aufweist.

5. Der Lagerkäfig (10) nach einem der vorhergehenden Ansprüche, wobei der erste Vorsprung (15) in axialer Richtung gegenüber der dazu korrespondierenden ersten Ausnehmung (16) ein Übermaß aufweist, so dass beim Einschieben des ersten Vorsprungs (15) in die erste Ausnehmung (16) eine Presspassung der Lagerkäfigabschnitte (13a; 13b) gebildet werden kann, um die Lagerkäfigabschnitte (13a; 13b) an der Trennstelle in axialer Richtung zueinander zu fixieren.

6. Der Lagerkäfig (10) nach einem der vorhergehenden Ansprüche, der einstückig aus einem Kunststoff geformt ist.

7. Ein Wälzlager mit einem Lagerkäfig (10) nach einem der vorhergehenden Ansprüche.

8. Ein Verfahren zum Herstellen eines Lagerkäfigs (10) mit zwei in einer Umfangsrichtung verlaufenden und axial beabstandeten Seitenringen (11), mit folgenden Schritten:
Ausbilden wenigstens einer Trennstelle in Umfangsrichtung zwischen einem ersten und einem zweiten Lagerkäfigabschnitt (13a; 13b);
Einformen, an gegenüberliegenden Begrenzungsflächen der Trennstelle, eines Paars aus einem ersten Vorsprung (15) und einer dazu korrespondierenden ersten Ausnehmung (16), um die Lagerkäfigabschnitte (13a; 13b) in wenigstens einer ersten Richtung zu fixieren; und
Einformen, an gegenüberliegenden Begrenzungsflächen des ersten Vorsprungs (15) und der dazu korrespondierenden ersten Ausnehmung (16), wenigstens eines Paars aus einem zweiten Vorsprung (17) und einer dazu korrespondierenden zweiten Ausnehmung (18), um die Lagerkäfigabschnitte (13a; 13b) zueinander in wenigstens zwei zusätzlichen Richtungen zu fixieren,
sodass der an der Trennstelle angeformte erste Vorsprung (15) und die dazu korrespondierende erste Ausnehmung (16) in Umfangsrichtung an gegenüberliegenden Begrenzungsflächen der Trennstelle eingeformt sind, so dass sich der erste Vorsprung (15) und die dazu korrespondierende erste Ausnehmung (16) in Umfangsrichtung ineinander schieben lassen, und
sodass das wenigstens eine Paar einander zugeordneter zweiter Vorsprünge (17) und dazu korrespondierender zweiter Ausnehmungen (18) an in radialer Richtung gegenüberliegender Begrenzungsflächen des ersten Vorsprungs (15) und der dazu korrespondierenden ersten Ausnehmung (16) eingeformt ist.
